# EUROPÄISCHE PATENTSCHRIFT

(11) **EP 1 117 163 B1**
(45) Veröffentlichungstag und Bekanntmachung des Hinweises auf die Patenterteilung: **05.07.2006**
(21) Anmeldenummer: 01100574.1
(22) Anmeldetag: 10.01.2001
(51) Int. Cl.: H02G 1/12

(54) **Kabelmesser**
Cable knife
Couteau pour câble

(30) Priorität: 12.01.2000 DE 10001002
(43) Veröffentlichungstag der Anmeldung: 18.07.2001
(73) Patentinhaber: WEICON GmbH & Co KG, 48157 Münster (DE)
(72) Erfinder: Weidling, Ralph, 48157 Münster (DE)
(74) Vertreter: Habbel, Hans-Georg

(56) Entgegenhaltungen:
- GB-A- 2 133 226
- US-A- 4 472 877

## Beschreibung

Die Erfindung betrifft ein Kabelmesser gemäß des Oberbegriffes des Hauptanspruches.

Derartige Kabelmesser sind bereits seit längerem bekannt, und durch den in der Regel federbeaufschlagten Klemmbügel wird das abzuisolierende Kabel von dem Klemmbügel fixiert und gegen das Messer gedrückt und anschließend erfolgt, z. B. nach einem Rundumschnitt des Messers, ein Entfernen der Kunststoffhülle eines Kabels.

Aus der DE-OS 1 640 776 "Vorrichtung zum Absetzen von Kabel- und Leitungsenden" ist ein derartiges Kabelmesser bekannt. Weitere vergleichbare Kabelmesser sind aus der deutschen Auslegeschrift 1 665 498 "Abmantelungswerkzeug für elektrische Kabel" und aus der DE-OS 31 40 193 "Werkzeug zum Abisolieren von Kabeln" bekannt.

Bei diesen bekannten Kabelmessern bzw. Abmantelungswerkzeugen ist es einsichtig, dass die ausreichende Fixierung des Kabels durch den Klemmbügel wichtig ist, um einen exakten Schnitt an der Kabelhülle anbringen zu können und um hierdurch ein exaktes Abisolieren zu ermöglichen. Aufgrund der sehr unterschiedlichen Durchmesser der abzuisolierenden Kabel kann bei den bekannten Kabelmessern eine ausreichende Fixierung sowohl dünner als auch dicker Kabel mit ein und dem gleichen Abisolierwerkzeug nicht erfolgen und es ist daher notwendig, für sehr unterschiedliche Kabeldurchmesser unterschiedliche Ausführungen von Kabelmessern zu verwenden, wobei ein jedes Kabelmesser nur in einem bestimmten, begrenzten Kabeldurchmesserbereich verwendet werden kann.

Es ist einseitig, daß es für den Benutzer nicht vorteilhaft ist, mehrere unterschiedliche Kabelmesser mit sich führen zu müssen, um sowohl sehr dicke als auch sehr dünne Kabel abisolieren zu können. Dies ist umständlich und zudem durch den notwendigen Kauf mehrerer unterschiedlicher Kabelmesser kostenintensiv.

Aus der gattungsbildenden GB-A-2 133 226 ist ein Kabelmesser bekannt, bei dem auf der-Klemmfläche des Klemmbügels ein Fixierelement angeordnet ist Nachteilhaft bei dieser bekannten Vorrichtung ist, daß das dort vorgeschlagene Fixierelement eine Ausnehmung für das zu bearbeltende Kabel aufweist und daher mehrere Fixierelemente mit unterschiedlichen Ausnehmungsgrößen verwandt werden müssen, um dieses Kabelmesser an Kabel unterschiedlicher Durchmesser anpassen zu können. Es ist einsichtig, daß das häufige Umwechseln dieser Fixierelemente bei unterschiedlichen, zu bearbeitenden Kabeldurchmessern lästig ist und im Alltagsbetrieb die mehreren mitzuführenden Fixierelemente verlorengehen können.

Der Erfindung liegt die Aufgabe zugrunde, ein Kabelmesser derart auszubilden, daß es unter Verwendung von wenigen Zubehörteilen für die Verarbeitung von Kabel mit einem relativ breiten Spektrum von Durchmessern geeignet ist und zudem einfach und kostengünstig herstellbar ist

Diese der Erfindung zugrundeliegende Aufgabe wird durch die Lehre des kennzeichnenden Teiles des Hauptanspruches gelöst.

Mit anderen Worten ausgedrückt wird eine Klemmfläche vorgeschlagen, die aus zwei im Winkel zueinander angeordneten Teilflächen besteht, wobei auf den beiden Teilflächen der Klemmfläche Fixierbacken angeordnet sind, die über ein Gelenk miteinander verbunden sind, so daß eine schnelle Montage dieses einteiligen Stückes möglich ist.

In vorteilhafter Ausgestaltung sind die Fixierbacken derart ausgebildet, daß sie den Klemmbügel hintergreifen, um hierdurch eine effektive und kostengünstige Fixierung der Fixierbacken an dem Klemmbügel zu ermöglichen.

Es ist vorteilhaft, wenn die Fixierbacken aus Kunststoff bestehen, um hierdurch eine kostengünstige Fertigung zu ermöglichen und ein geringes Gewicht zu ermöglichen.

Die Produktionskosten der vorgeschlagenen Vorrichtung werden zusätzlichdadurch gesenkt, wenn das beide Teilbereiche fixierende Gelenk als Filmscharnier ausgebildet ist.

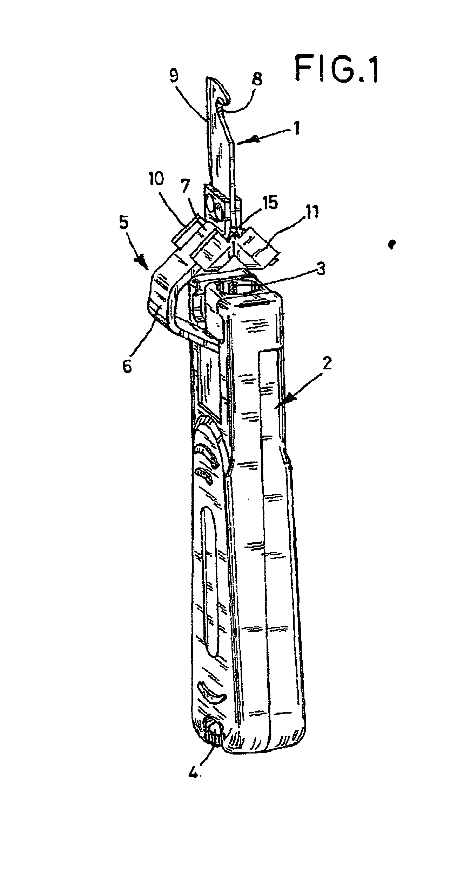

Ein Ausführungsbeispiel der Erfindung wird nachfolgend in den Zeichnungen dargestellt, wobei
- Fig. 1: ein mit Fixierbacken ausgestattetes Kabelmesser darstellt, wobei aus Übersichtlichkeitsgründen der Klemmbügel in angehobener Position dargestellt ist,
- Fig. 2: stellt in einer Ansicht von vorne ein vorgeschlagenes Kabelmesser dar und
- Fig. 3: stellt ein Kabelmesser dar mitsamt einem gehaltenen Kabel mit geringem Durchmesser,
- Fig. 4: zeigt ein Kabelmesser mit einem darin gehaltenen Kabel mit großem Durchmesser und
- Fig. 5: zeigt in vergrößerter Darstellung einen Schnitt entlang der Linie 4 - 4 aus Fig. 3.

Ein Kabelmesser 1 - wie es auch zur Zeit entsprechend des Standes der Technik verwendet wird - besteht im wesentlichen aus einem Handgriff 2, einem Messer 3, das mittels eines am unteren Ende des Handgriffes 2 angeordneten Betätigungsrades 4 drehbar ausgestaltet ist und auch in der Höhe verstellbar ist.

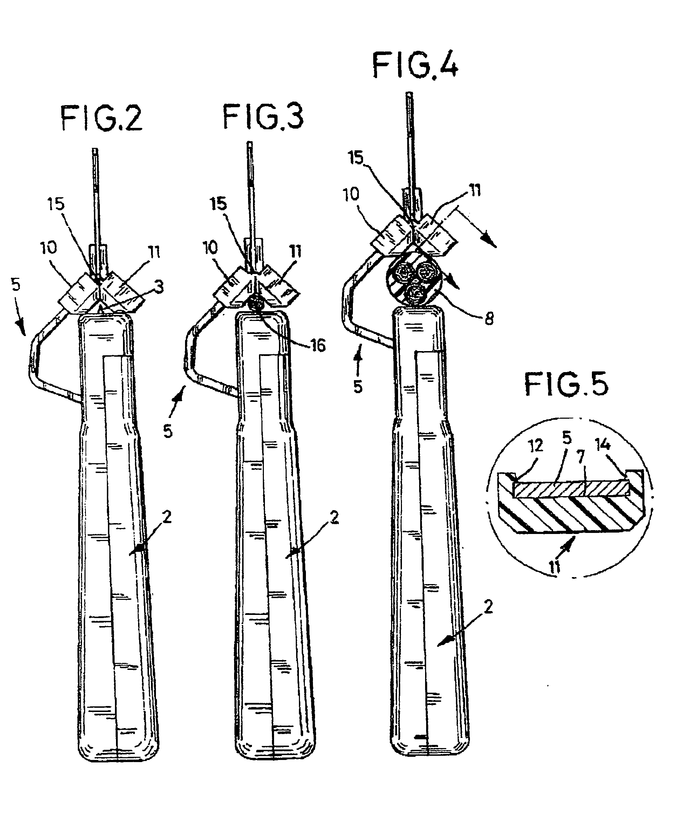

Darüber hinaus ist an dem Kabelmesser 1 ein Klemmbügel 5 angeordnet, der federbeaufschlagt ist und stets in Richtung des Messers 3 zurückgezogen wird, wie dies aus Fig. 2 ersichtlich ist. Der Klemmbügel 5 weist eine Aufweitung 6 auf, in der der Klemmbügel 5 vom Handgriff 2 fortgerichtet ist und sich in dem oberen Bereich wieder der Verlängerung des Handgriffes 2 nähert. In dem oberen Bereich des Klemmbügels 5 ragt der Klemmbügel 5 über das Messer 3 und ist in seinem weiteren Verlauf wieder nach unten gerichtet, so daß sich letztendlich eine V-förmige Ausbildung des Klemmbügels 5 in seinem oberen Bereich ergibt und in diesem Bereich wirkt der Klemmbügel 5 als Klemmfläche 7, die, wenn ein Kabel 8 entsprechend Fig. 3 zwischen die Klemmfläche 7 und den Handgriff 2 gelegt wird, mit der Klemmfläche 7 das Kabel 8 gegen die Stirnseite des Handgriffes 2 und somit gegen das Messer 3 preßt.

An dem oberen Bereich des Klemmbügels 5 kann zudem eine Hakenklinge 8 und eine gerade Klinge 9 angeordnet sein, um auch mit diesen Klingen ein zusätzliches Arbeiten am Kabel zu ermöglichen.

Die Aufweitung 6 des Klemmbügels 5 ermöglicht zum einen eine einfache Betätigung, da beim Druck gegen die Aufweitung 6 mittels des Daumens der Klemmbügel 5 in einfacher Weise nach oben entgegen der Federkraft geschoben werden kann. Zudem ermöglicht die Aufweitung 6 die Aufnahme von dicken Kabeln, die entsprechend Fig. 4 sogar einen größeren Durchmesser haben können als es der oberen Stärke des Handgriffes 2 entspricht.

Um eine größere Variabilität bei den mit einem Kabelmesser 1 zu verarbeitenden Kabeldurchmessern zu erreichen, wird nun vorgeschlagen, im Klemmbereich des Klemmbügels 5 zusätzliche Fixierbacken 10, 11 vorzusehen, durch die, wie auch aus den Fig. 2 bis 4 ersichtlich wird, der lichte Abstand zwischen Klemmvorrichtung und Messer 3 bzw. Oberfläche des Handgriffes 2 reduziert wird. Dies ermöglicht also auch die klemmende Fixierung von sehr dünnen Kabeln und ermöglicht ebenfalls die Verarbeitung von dicken Kabeln. In besonderen Fällen können die Fixierbacken 10 und 11 in diesem Ausführungsbeispiel abgenommen werden, um besonders dicke Kabel verarbeiten zu können.

In diesem Ausführungsbeispiel sind die Fixierbacken 10 und 11 aus Kunststoff gefertigt, um zum einen leicht zu sein und zum anderen eine kostengünstige Produktion zu ermöglichen. Zudem kann ein derartiger Kunststoff gewählt werden, so daß ein ungewolltes Rutschen des Kabels an den Fixierbacken 10 und 11 vermieden wird. Wie aus der Detailzeichnung Fig. 5 ersichtlich wird, hintergreift die Fixierbacke 11 an seinen beiden Seiten den Klemmbügel 5. Die hintergreifenden Rastnasen haben jeweils eine schräge Oberfläche und ermöglichen daher, wenn die Fixierbacken 10 und 11 auf den Klemmbügel 5 gedrückt werden, ein leichtes Aufclipsen der Fixierbacken.

Die beiden Fixierbacken 10 und 11 sind miteinander gelenkig verbunden und in diesem Ausführungsbeispiel wird ein Filmscharnier 15 verwendet. Dies hat den Vorteil, daß die beiden Fixierbacken 10 und 11 einteilig ausgebildet sind und daher besonders einfach montiert werden können. Zudem verhindert das Gelenk bzw. Filmscharnier 15, daß die Fixierbacken 10 und 11 auf dem Klemmbügel 5 verrutschen. Das Gelenk kann den Vorteil haben, daß die Fixierbacken 10, 11 in gerader Form platzsparend transportiert werden können und sich trotzdem bei der Montage an das Kabelmesser der Form des Klemmbügels 5 anpassen können.

Selbstverständlich ist es auch möglich, die Fixierbacken 10 und 11 unlösbar an dem Klemmbügel 5 anzuordnen bzw. den Klemmbügel 5 derart auszubilden, daß er durch eine entsprechende Formgebung bereits die Funktion der beschriebenen Fixierbacken 10 und 11 übernimmt, z. B. d. h. eine entsprechende Profilgebung.

Bezugnehmend auf Fig. 3 ist zusätzlich dargestellt, daß von den vorgeschlagenen Kabelmessern auch sehr dünne Kabel 16 gehalten werden können, ohne daß hier auf eine andere Version des Kabelmessers zurückgegriffen werden muß, wie es zur Zeit gemäß des Standes der Technik erforderlich ist.

## Patentansprüche

1. Kabelmesser(1), mit einem Handgriff (2), einem daran angeordneten Messer (3) und einem Klemmbügel(5), dessen das Kabel beaufschlagende Klemmfläche(7) oberhalb des Messers angeordnet ist zugunsten einer Fixierung des Kabels zwischen Messer (3) und Klemmbügel (5), wobei auf der Klemmfläche (7) den Klemmbügels (5) eine Fixierbacke (10, 11) angeordnet ist, **gekennzeichnet durch** die Klemmfläche (7), die aus zwei im Winkel zueinander stehenden Teilbereichen besteht, wobei auf beiden Teilbereichen eine Fixierbacke (10, 11) angeordnet ist, wobei die Fixierbacken (10, 11) mit einem Gelenk miteinander verbunden sind.

2. Kabelmesser gemäß Anspruch 1, **gekennzeichnet durch** die an der Klemmfläche (7) lösbar befestigten Fixierbacken (10, 11).

3. Kabelmesser gemäß Anspruch 2, **gekennzeichnet durch** die den Klemmbügel (5) mittels Rastnasen (12, 14) hintergreifenden Fixierbacken (10, 11) zugunsten einer lösbaren Fixierung der Fixierbacken (10,11).

4. Kabelmesser gemäß einem der vorhergehenden Ansprüche, **gekennzeichnet durch** die aus Kunststoff bestehenden Fixierbacken (10,11).

5. Kabelmesser gemäß einem der vorhergehenden Ansprüche, **gekennzeichnet durch** ein Filmscharnier (15) als Gelenk.

## Claims

1. Cable knife (1), with a grip (2), a blade appointed on same (3) and a clamp strap (5), whose clamping surface (7) impinging the cable is appointed above the blade in favour of a fixation of the cable between the blade (3) and clamp strap (5), whereby a fixing jaw (10,11) is appointed on the clamping surface (7) of the clamp strap (5), **characterised by** the clamping surface (7), which comprises two partial areas at an angle to each other, whereby a fixing jaw (10,11) is appointed on both partial areas, whereby the fixing jaws (10,11) are connected to each other with a joint.

2. Cable knife in accordance with Claim 1, **characterised by** the fixing jaws (10,11) hitherto attached to the clamping surface (7).

3. Cable knife in accordance with Claim 2, **characterised by** the fixing jaws (10,11) back-gripping the clamp strap (5) by means of locking catches (12,14) in favour of a removable fixation of the fixing jaws (10,11).

4. Cable knife in accordance with one of the aforementioned claims, **characterised by** the fixing jaws (10,11) made of plastic.

5. Cable knife in accordance with one of the aforementioned claims, **characterised by** a film hinge (15) as a joint.

## Revendications

1. Couteau pour câble (1), avec une poignée (2), un couteau (3) placé dans celle-ci et un étrier de serrage (5) dont la surface de serrage (7) poussant le câble est placée au-dessus du couteau pour favoriser une fixation du câble entre le couteau (3) et l'étrier de serrage (5), une mâchoire de fixation (10, 11) étant placée sur la surface de serrage (7) de l'étrier de serrage (5), **caractérisé en ce que** la surface de serrage (7) est constituée de deux zones partielles disposées selon un angle l'une par rapport à l'autre, une mâchoire de fixation (10, 11) étant placée sur les deux zones partielles, les mâchoires de fixation (10, 11) étant reliées l'une à l'autre par une articulation.

2. Couteau pour câble selon la revendication 1, **caractérisé en ce que** les mâchoires de fixation (10, 11) sont fixées de manière détachable à la surface de serrage (7).

3. Couteau pour câble selon la revendication 2, **caractérisé en ce que** les mâchoires de fixation (10, 11) viennent en prise par derrière avec l'étrier de serrage (5) à l'aide de taquets à crans (12, 14) pour favoriser une fixation détachable des mâchoires de fixation (10, 11).

4. Couteau pour câble selon l'une quelconque des revendications précédentes, **caractérisé en ce que** les mâchoires de fixation (10, 11) sont constituées d'une matière plastique.

5. Couteau pour câble selon l'une quelconque des revendications précédentes, **caractérisé par** une charnière-film (15) comme articulation.
